# EUROPEAN PATENT SPECIFICATION

(11) **EP 3 502 363 B1**
(45) Date of publication and mention of the grant of the patent: **17.11.2021**
(21) Application number: 17209793.3
(22) Date of filing: 21.12.2017
(51) Int. Cl.: E03C 1/04, F16L 5/02, F16L 5/12, F16B 13/00, F16B 13/02, F16B 13/12

(54) **ASSEMBLY FOR FASTENING A WALL MOUNTED FLANGE FOR A WATER TAP ON A WALL**
ANORDNUNG ZUR BEFESTIGUNG EINES WANDMONTIERTEN FLANSCHS FÜR EINEN WASSERHAHN AN EINER WAND
ENSEMBLE DE FIXATION D'UNE BRIDE DE MONTAGE MURAL POUR UN ROBINET D'EAU SUR UNE PAROI

(43) Date of publication of application: 26.06.2019
(73) Proprietor: Altus BVBA, 2288 Bouwel (BE)
(72) Inventor: Smans, Mark, 2980 Halle - Zoersel (BE); Wirkus, Jeremy, 5629 KC Eindhoven (NL)
(74) Representative: IP HILLS NV

(56) References cited:
- US-A- 1 757 570
- US-A- 3 076 668
- US-A1- 2016 356 402

## Description

### Field of the Invention

The present invention generally relates to an assembly for fastening a wall mounted flange on a wall suitable to connect a faucet or water tap through the wall to a water drain tap.

### Background of the Invention

In order to supply a liquid such as water on one side of a wall, for example an exterior or outside wall of a building, a throughput is provided through the wall to connect a faucet to a water drain tap on the other side of said wall. The entire assembly needs to be assembled in a robust and rigid manner such that the water may be supplied in a safe and secure way.

Typically, the assembly is secured by providing, on the one side, a wall mounted flange whereupon both a water tap and a shank are mounted, and on the other side of the wall a locking flange which locks the shank. The assembly is thus clamped on the wall. The wall mounted flange is either first screwed on the shank and subsequently stabbed with the shank through the throughput such that it may be secured on the other side. Alternatively, the shank is first secured on one side, and the wall mounted flange is screwed on it by rotational movements on the other side. The wall on the side comprising the wall mounted flange may be partly carved out in order to position the wall mounted flange. An exemplary embodiment of such an assembly is disclosed in document US6948518B1 wherein a wall hydrant comprises an escutcheon used to secure the assembly against a wall by clamping it between both side walls.

A drawback of securing an assembly by clamping it between both sides of a wall, is that over time the assembly might by either loosened or even strengthened thereby damaging the wall. This is due to the different coefficients of expansion between the wall on the one side and the assembly on the other side. Thus, on regular time periods, the securing of the assembly needs to be monitored.

Alternatively, a wall mounted flange may also be secured through the use of screws fixing the flange at only one side of the wall. Such an embodiment is disclosed in document US9016306B1 wherein an anchoring flange member is fixed on a wall and subsequently the wall hydrant is fixed on said anchoring flange member. Besides the hole of the throughput, two additional screw holes are provided in the wall. Another similar exemplary embodiment is disclosed in document US6668852B1.

In addition to the drawback that the wall is damaged through the two additional screw holes, securing the assembly at one side by use of an anchoring flange member is only appropriate when the wall at the side of the anchor is sufficiently flat. Furthermore, the screw holes need to be positioned at an adequate distance from the hole of the throughput itself in order to provide enough stability. If the screw holes are too close to the throughput hole, there is a risk of a rupture between said hole and that of the screws, especially since the screws need to be sufficiently long in order to secure the assembly.

Otherwise, in document US6421849B1 a mounting assembly is disclosed which is also suitable to secure an assembly at only one side of a wall without the need of providing screwing holes. The assembly comprises a fitting having an externally threaded outer housing and by rotating the fitting about its longitudinal axis it is secured through a nut and an elevator having two flexible legs. These flexible legs are pushed against the inner side of the throughput hole as a result of the rotations thereby securing the assembly. However, when a water tap is connected via tubes to the fitting, these tubes will rotate as well and thus only will be executable when the tubes are flexible or not connected at all.

Further, in US2016/0356402A1 a system for mounting a faucet assembly to the exterior portion of a dwelling is disclosed. A mounting sleeve is employed that is associated with a tube of a faucet assembly that is generally positioned outside of a dwelling. The tube is rigidly interconnected to a mounting sleeve that is supported by a bracket that allows for selective adjustments. That is, the mounting sleeve may be selectively offset from the interior surface of the dwelling, thereby accommodating exterior building surfaces with irregular shapes such as stone, brick, mortar, stucco, etc. In such cases, the mounting system provides additional rigidity to the faucet assembly/dwelling interconnection.

It is an object of the present invention to alleviate the above drawbacks and to provide an improved solution for fastening an assembly on a wall suitable to connect an inner water tap to an outside faucet. Moreover, it is an object to provide an assembly which may be mounted in a straightforward and neatly manner by reducing the risk of damaging the wall.

### Summary of the Invention

This object is achieved, in a first aspect, by a fastening assembly kit suitable for connecting an outside water tap to an inner water drain tap through a wall bored hole, the fastening assembly kit comprising:
- a fastener, comprising a hollow cylindrical or tapered body, comprising
   - apertures at both ends of its longitudinal direction;
   - a treaded outer surface;
   - a treaded inner surface;
- a wall mounted flange,
whereby:
- the fastening assembly kit is adapted to be mounted such that:
   - the treaded inner surface of the fastener receives the wall mounted flange;
   - the fastener is inserted inside the wall bored hole, thereby fastening the treaded outer surface of the fastener to an inner surface of the wall bored hole,
- the wall mounted flange comprises a treaded outer surface, the treaded outer surface comprising grooves, and
- the treaded inner surface of the fastener comprises one or more limbs extending in the longitudinal direction of the hollow cylindrical or tapered body, such that in mounted condition of the fastening assembly kit, the grooves of the wall mounted flange are clamped by the limbs of the fastener, thereby blocking an axial movement of the wall mounted flange.

The fastening assembly kit thus comprises a fastener and a wall mounted flange. The fastener comprises a hollow cylindrical or tapered body comprising openings or apertures at both ends of this body. Further, the inner as well as the outer surface of the cylindrical body are treaded or processed. More in particular, the outer surface of the fastener is being treaded in such a way that it is fastened to an inner surface of the wall bored hole when the fastener is inserted. This is, for example, achieved by increasing the roughness of the outer surface. Furthermore, the outer diameter of the cylindrical body is adapted to the diameter of the wall bored hole. Also, the inner surface is arranged to be able to receive the wall mounted flange by adjusting the inner diameter of the body to the outer diameter of the housing. Next, both the housing of the wall mounted flange and the inner surface of the fastener are being treaded in such a way that the wall mounted flange is fastened to the inner surface when inserted.

The treaded inner surface of the fastener comprises one or more limbs extending in the longitudinal direction of the hollow cylindrical or tapered body. A limb may be tapered in the longitudinal or axial direction of the fastener such that its width extends from the aperture wherein the wall mounted flange is extended to the other aperture. Moreover, the outer surface of the wall mounted flange comprising grooves. In this way, the wall mounted flange may be clamped by the limbs, by, for example, grooves extending radially on the outer surface of the wall mounted flange.

Besides the ideal shape of a cylinder, the body of the fastener may also be tapered by, for example, comprising a larger diameter at the side wherein the wall mounted flange is inserted compared to the other side.

Firstly, there is no need to provide additional screwing holes but only a throughput. An advantage is thus that the fastener may also be used for walls which are not completely flat. Secondly, the securing or fastening of the wall mounted flange by the fastener is executed at only one side of the wall, which makes the mounting more easily compared to securing or clamping it at two sides. Furthermore, by fastening the wall mounted flange at only one side, the influence of differences in coefficients of expansion is reduced as well. Thirdly, the fastener allows to insert the wall mounted flange axially, thus no rotational movement is needed, in contrast to fasteners used to mechanically join or affix two or more objects such as a plug and a screw, which makes the mounting straightforward and neatly, since the number of steps needed to install it is small. Finally, the wall mounted flange may also be fastened on walls which are not completely flat.

According to an embodiment, the treaded outer surface of the fastener comprises one or more ribs extending in the radial direction of the hollow cylindrical body, the one or more ribs being arranged to block an axial movement of the fastener when inserted in the wall bored hole.

In other words, the one or more ribs form a wedge over the outer circumference of the body and are pointed or oriented such that the fastener may be inserted in an effortless manner into the wall bored hole, yet block the fastener when pulling out of it.

According to an embodiment, the fastener further comprises a stopping collar at one aperture being arranged for retaining the fastener against a wall side when inserted in the wall bored hole.

The stopping collar is, for example, a ring or frame at one side of the cylindrical body, thus at an aperture, and mounted over the entire circumference or in a discontinued or intermittent way. As a result, the fastener may be inserted in the wall bored hole without a risk of inserting the fastener too deep in it.

According to an embodiment, the stopping collar of the fastener comprises a locking hole, and the wall mounted flange comprises a locking plug, such that in assembled condition the locking plug is inserted in the locking hole, thereby blocking a rotational movement of the wall mounted flange when inserted in the fastener.

The wall mounted flange thus, comprises locking plug, for example a pin or plug suitable to be inserted in the locking hole of the fastener when inserted.

The stopping collar comprises a locking means, for example, a tab extending in the axial direction away from the cylindrical body. The wall mounted flange comprises, for example, a notch such that when inserted in the fastener, the tab shoves in the notch and thus blocks a rotational or radial movement of the wall mounted flange with respect to the fastener.

Advantageously, when subsequently a faucet is installed or mounted in the wall mounted flange by screwing it in, the locking means ensures that the faucet may be installed in a proper way since the wall mounted flange will not rotate together with said faucet.

The locking plug extends axially from the wall mount flange and is relatively small in length with respect to total length of the wall mounted flange. Thus, besides the wall bored hole, a second locking wall bored hole is provided in the wall as well, which is also relatively small since it only needs to accommodate the locking plug. Next, when the wall mounted flange is axially inserted in the fastener, the locking plug is guided into the locking hole and thus blocks any rotational movement of the flange when inserted. Advantageously, the resistance to block this movement is partly provided by the wall itself.

According to an embodiment, the threaded outer surface of the hollow cylindrical or tapered body of the fastener further comprises truncated conical wedges rotational symmetrically positioned around the cylindrical or tapered body at one end of the hollow cylindrical or tapered body such that the fastener is centred in the wall bored hole when inserted.

In other words, besides the one or more ribs extending in the radial direction, the outer surface of the fastener may further comprise wedges in order to centre the fastener in the wall bored hole. These wedges are conical comprising a larger surface close to one end or an aperture and tapered in the axial direction away from said end. Furthermore, due to their shape, the wedges may also block a rotational movement of the fastener when inserted in the wall bored hole.

According to an embodiment, the hollow cylindrical or tapered body of the fastener further comprises one or more recesses suitable to accommodate an adhesive.

Preferably, these recesses are positioned to the end comprises the stopping collar and/or the truncated conical wedges. In other words, the recesses are located to that side of the fastener wherein subsequently the wall mounted flange is inserted. These recesses may be utilized to accommodate an adhesive. For example, when a chemical anchor is used to strengthen the fastening of the fastener in the wall bored hole, the recesses accommodate the substrate of the anchor. Alternatively, another type of glue or adhesive may be used to strengthen the fastening. Thus, by providing said recesses, the wall mounted flange may still be inserted in the fastener in a proper manner.

According to an embodiment, the hollow cylindrical or tapered body of the fastener further comprises a slit extending longitudinally between the apertures at both ends.

The slit therefore cuts the cylindrical body over its longitudinal length, although the fastener still comprises one piece. The slit causes that the fastener has a resilient effect when both sides of the slit are pushed together. It is thus an advantage that the outer diameter of the cylindrical body may be larger compared to the diameter of the wall bored hole. Moreover, the same accounts for the opposite, namely that the diameter of the wall bored hole may be larger than the diameter of the cylindrical body. In other words, any deviation due to, for example, tolerances of tools to bore the whole may be capture by the cylindrical body comprising the slit.

The fastener is then inserted in the wall bored hole and due to the resilient effect, the outer surface of the fastener is pushed against the inner surface of the wall bored hole. The fastening between said two surfaces will thus be more efficient.

According to an embodiment, the fastener further comprises a pointing leg radially extending from the inner surface of the hollow cylindrical or tapered body to a central axis of the hollow cylindrical or tapered body at an aperture, the pointing leg being arranged to point the central axis.

The pointing leg or arrow indicates or points to the central axis of the cylindrical body. In this way, the fastener may be hold against a wall at the side comprising the pointing leg such that a reference point may be drawn on said wall. This reference point then is used as a starting point for drilling or sawing the wall bored hole. Afterwards, the point leg is break down of the fastener such that the wall mounted flange may be inserted in to it.

According to an embodiment, the wall mounted flange comprises a compartment suitable to accommodate an adhesive between the wall mounted flange and a wall when inserted in the wall bored hole.

Thus, if an adhesive is used to strengthen the fastening of the fastener in the wall bored hole, the adhesive may be further covered or masked by the wall mounted flange.

According to a second aspect, the invention relates to a method for fastening a wall mounted flange, the wall mounted flange comprising a treaded housing comprising grooves, in a wall bored hole by use of a fastener, the fastener comprising a hollow cylindrical or tapered body comprising apertures at both ends of its longitudinal direction, a treaded outer surface, and a treaded inner surface arranged for receiving the wall mounted flange, the treaded inner surface comprising one or more limbs extending in the longitudinal direction of the hollow cylindrical or tapered body, the method comprising the steps of boring or sawing in a wall the wall bored hole, the wall bored hole suitable for connecting an outside water tap to an inner water drain tap, inserting the fastener in the wall bored hole such that the treaded outer surface of the fastener is fastened to an inner surface of the wall bored hole, and inserting the wall mounted flange in the fastener such that the treaded housing of the wall mounted flange is fastened to the treaded inner surface of the fastener by clamping of the grooves by the limbs, thereby blocking an axial movement of the wall mounted flange.

### Brief Description of the Drawings

Fig. 1 illustrates a front-side-view of a fastener according to an embodiment;
Fig. 2 illustrates a back-side-view of the fastener in the embodiment of Fig. 1;
Fig. 3 illustrates a wall mounted flange according to an embodiment; and
Fig.4 illustrates a fastening assembly kit comprising the fastener of the embodiment in Fig. 1 and the wall mounted flange of the embodiment in Fig. 4;
Fig. 5A illustrates a top view of the fastener according to the embodiment of Fig. 1 and Fig. 2; and
Fig. 5B illustrates a bottom view of the fastener according to the embodiment of Fig. 1 and Fig. 2;
Fig. 6 illustrates components of the wall mounted flange according to the embodiment of Fig. 3; and
Fig. 7 illustrates the wall mounted flange according to the embodiment of Fig. 3.

### Detailed Description of Embodiment(s)

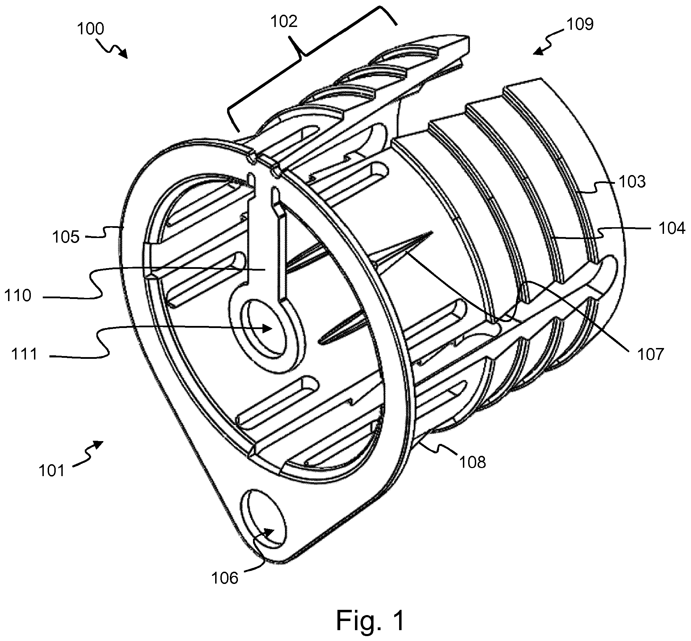

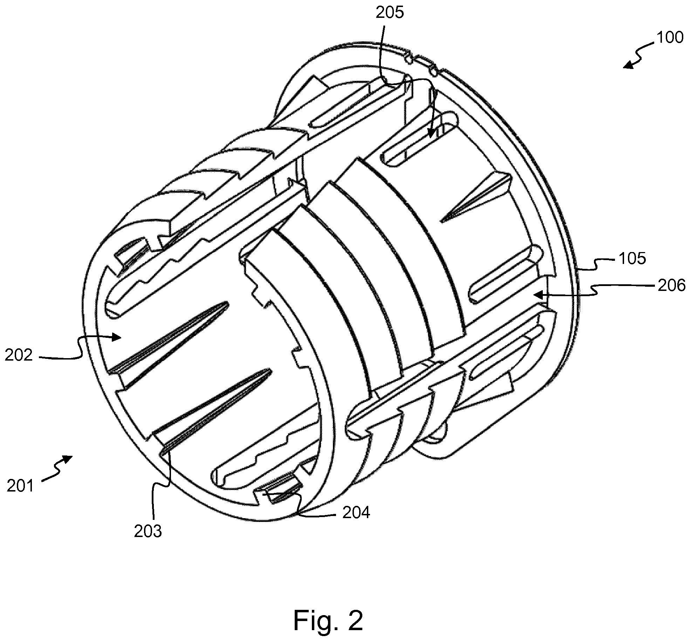

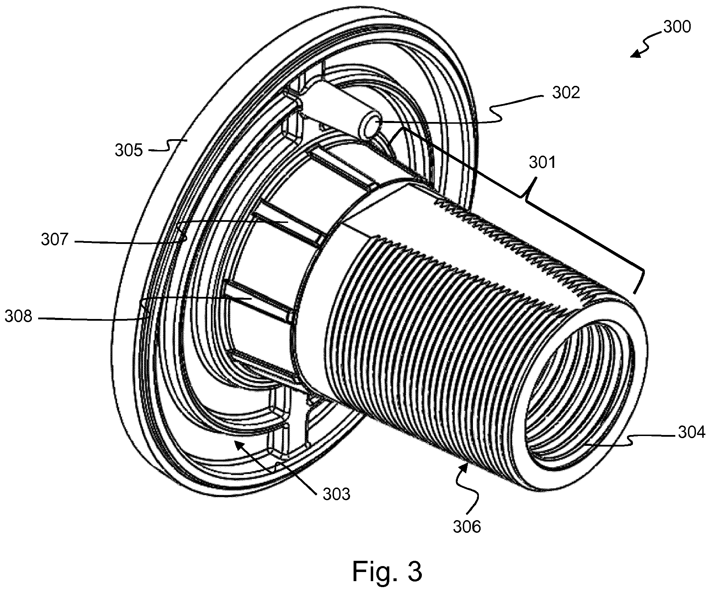

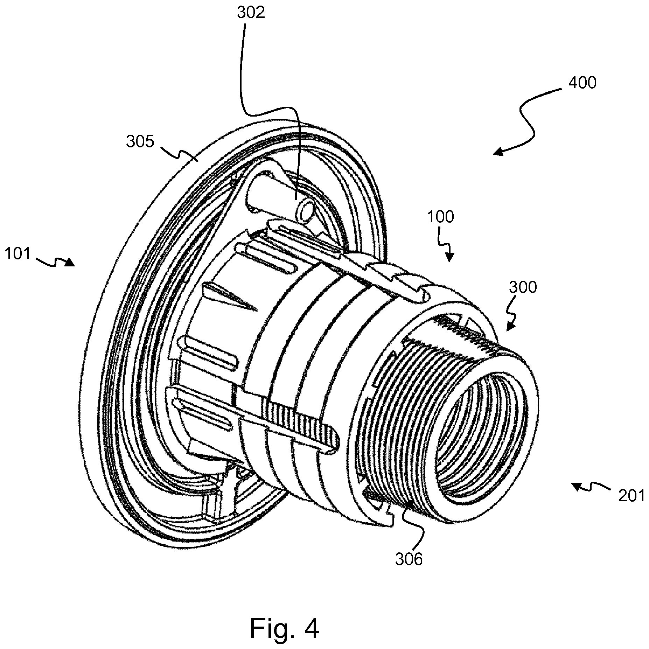

According to an embodiment, the invention relates to a fastening assembly kit, comprising a fastener 100 and a wall mounted flange 300, suitable for connecting an outside water tap to an inner water drain tap through a wall bored hole. Figure 1 and Figure 2 illustrate such a fastener 100 and Figure 3 illustrates such a wall mounted flange 300. Figure 4 illustrates the wall mounted flange 300 of Figure 3 inserted in the fastener 100 of Figure 1 and Figure 2. The view of Figure 1 is denominated as the front-side-view and the view in Figure 2 as the back-side-view, but it should be obvious that this is a relative term and solely is used for the purpose of illustration.

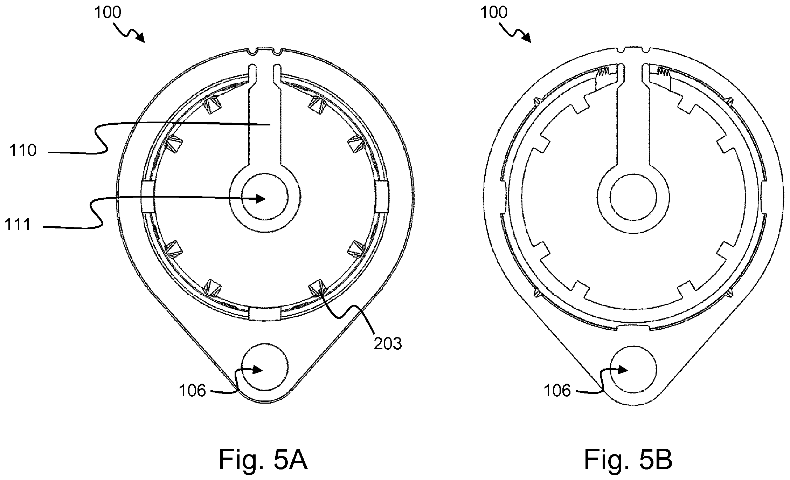

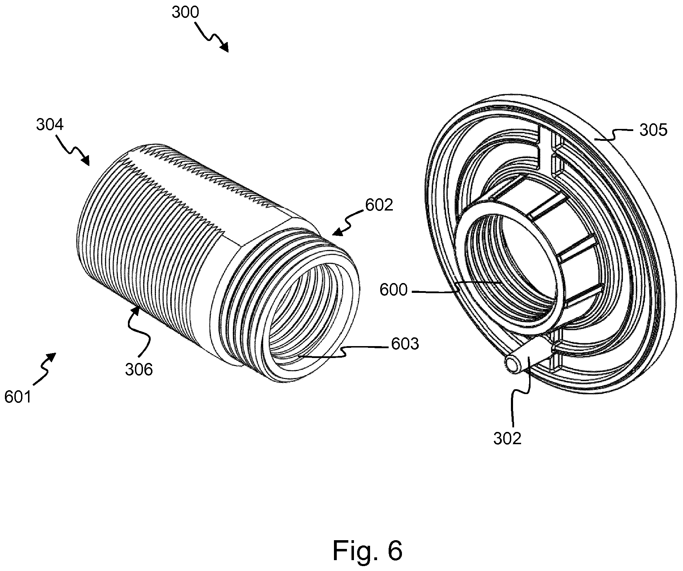

Figure 5A illustrates the fastener 100 represented in Figure 1 and 2 in a top view and Figure 5B in a bottom view. Figure 6 illustrates the components of the wall mounted flange 300 of Figure 3.

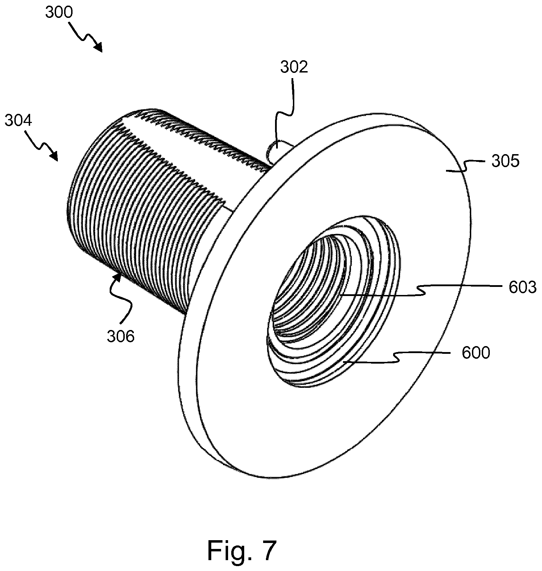

Figure 7 illustrates the wall mounted flange 300 according to the embodiment of Figure 3.

The fastener 100 illustrated in Figures 1 and 2 comprises an aperture 101 at one end and an aperture at the other end 201 in the longitudinal direction of a hollow cylindrical body. The aperture 101 is suitable to receive the wall mounted flange 300 of Figure 3, as illustrated by the assembly 400 in Figure 4 wherein the wall mounted flange 300 is inserted in the fastener 100 through aperture 101.

The wall mounted flange 300 comprises a panel 305 and a pipe 601. The pipe 601 as well as the panel 305 comprises screw threads 602 and 600 such that the pipe 601 may be screwed in the panel 305. The panel 305 is suitable to be connected to a water faucet, while the pipe 601 is suitable to be connected to a water drain tap through, for example, inner screw thread 304. Alternatively, the water faucet may be also connected to the pipe 601 by inner screw thread 603. The panel 305 than protects the wall at which the wall mounted flange 300 is mounted. The fastener 100 thus fastens the wall mounted flange 300 when mounted on the wall.

The fastener 100 comprises a cylindrical body, which on its behalf comprises a treaded outer surface 102 and a treaded inner surface 202. The treated outer surface 102 comprises one or more ribs extending in the radial direction of the cylindrical body, such as ribs 103 and 104. The treaded outer surface 202 further comprises truncated conical wedges, such as 107 and 108, at the side of aperture 101, thus at the side that is suitable to receive the wall mounted flange 300.

Furthermore, at the side of aperture 101, the fastener 100 comprises a stopping collar 105 comprising a locking hole 106 to block a rotational movement of the wall mounted flange 300 when inserted. The wall mounted flange 300 thus comprises a pin or plug 302 which is inserted in the locking hole 106 when assembled, such as in assembly 400.

At the aperture 101, the fastener 100 comprises a pointing leg 110 which extends radially from the surface of the cylindrical body to the central axis thereof. The pointing leg 110 points to the axis by hole 111.

The cylindrical body further comprises a slit 109 extending from aperture 101 to aperture 201. Furthermore, the cylindrical body comprises recesses, such as recess 205 and recess 206.

The treaded inner surface 202 comprises a plurality of limbs extending in the longitudinal direction of the cylindrical body, such as limb 203 and limb 204. These limbs 203, 204 are arranged to block the wall mounted flange 300 when inserted in the fastener 100. To this end, the wall mounted flange 300 comprises a treaded outer surface 301 comprising, for example, grooves 306 on the pipe 601 thereof. The grooves 306 are thus blocked by the limbs 203 and 204.

The wall mounted flange 300 further comprises limbs 308 and 307 at the panel 305.

A wall bored hole is bored or sawed in a wall, for example an outside wall. This hole comprises a throughput in the wall such that it is suitable to connect an inner water drain tap to an outside water tap. This throughput may be made according to the following steps.

Firstly, the fastener 100 is hold against the wall with the side of aperture 101. By use of the pointing leg 110 and the hole 111, a centre punch is marked on the outside wall. The same is done by use of locking hole 106. Hence, two marking points are marked on the wall. In the point marked by the locking hole 106, a hole is bored with a diameter corresponding to that of the pin 302 of the wall mounted flange 300 and with a depth corresponding to the length of the pin 302. In the point marked by the hole 111 a similar hole is bored in the wall.

Secondly, by use of the hole bored via hole 111, a blind hole is bored or sawed in the wall at the outside therefrom. The diameter of the blind hole corresponds to the diameter of the cylindrical body of the fastener 100. The length or depth of the blind hole corresponds to the length of the cylindrical body of the fastener 100.

Thirdly, through the blind hole, a throughput is bored in the wall from the outside to the inside. The diameter of this throughput may be smaller than the diameter of the blind hole, but needs to be at least suitable to stab through a pipe or water supply from the inside through the wall to the outside.

Thus, fourthly, a pipe or connection is stabbed through the wall from the inside to the outside. Simultaneously, or even before or afterwards, the fastener 100 is inserted in the blind hole. Anyhow, the fastener 100 needs to be inserted in the blind hole prior to connecting the connection to the wall mounted flange 300. Furthermore, it should be obvious that the diameter of the cylindrical body of the fastener 100 is larger than that of the connection.

The fastener 100 is inserted in the blind hole such that the locking hole 106 is positioned at the hole bored by making use of the pointing leg 110 and the hole 111. Furthermore, the pointing leg 110 may be broke off the fastener 100 such that the slit 109 extends completely from the aperture 101 to aperture 201. Since the pointing leg 110 only needs to point to the axis in order to make a marking point via hole 111, it is further no more needed.

Because of the slit 109, the diameter of the blind hole may differ from the diameter of the cylindrical body of the fastener 100. Thus, when the diameter of the blind hole is smaller, the cylindrical body will be pushed such that the slit gets smaller. On the other hand, the diameter of the blind hole may also be larger than the diameter of the cylindrical body of the fastener 100. In this occurrence, the slit may get bigger.

The ribs 103 and 104 are positioned and oriented in such a way that the fastener 100 may easily be inserted in the blind hole, but will block an axial movement when trying the removing again the fastener 100 out of the blind hole. Besides, the truncated conical wedges 107 and 108 ensures that the fastener 100 is rotational symmetrical positioned in the blind hole. Furthermore, the stopping collar 105 prevents that the fastener 100 is pushed too deep in the blind hole.

In a subsequent step, thus after inserting the fastener in the blind hole, the connection of the water drain is connected to the wall mounted flange 300. The connection, for example, comprises screw tread which may be inserted in the screw thread 304 of the wall mounted flange 300. Since the wall mounted flange 300 is in this step not yet inserted in the fastener 100, the wall mounted flange may be rotated with respect to the connection through the throughput. In other words, the connection doesn't need to be rotated when connecting to the wall mounted flange 300.

Alternatively, the connection may also be connected to the wall mounted flange 300 by clamping it at the end of the pipe 601 pointing away from the panel 305.

Next, the wall mounted flange 300 is inserted in the fastener 100 by axially pushing it into the fastener 100, so no rotational movement is needed. The pin 302 of the wall mounted flange 300 is pushed in the bored hole such that a rotational movement of the wall mounted flange 300 when inserted is further blocked. The limbs 203 and 204 further block the wall mounted flange 300 through the grooves 306. Also, the limbs 307 and 308 pushes the fastener 100 against the inside of the blind hole. As a result, the fastener 100 as well as the wall mounted flange 300 are mounted in the wall and blocked therein. Finally, a water tap may be mounted on the wall mounted flange 300 at the outside of the wall.

Optionally, the assembly 400 may be further inserted in the wall by use of an adhesive, such as a chemical anchor. Thus, after that the fastener 100 is inserted in the blind hole, an adhesive is inserted as well for strengthen the connection between the fastener 100 and the blind hole on the one hand, and the connection between the fastener 100 and the wall mounted flange 300, thus the assembly. The recesses 205 and 206 in the fastener are arranged to accommodate the adhesive. A recess 303 in the panel 305 of the wall mounted flange 300 is as well arranged to accommodate an adhesive.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A fastening assembly kit suitable for connecting an outside water tap to an inner water drain tap through a wall bored hole, the fastening assembly kit comprising:
- a fastener (100), comprising a hollow cylindrical or tapered body comprising:
∘ apertures (101, 201) at both ends of its longitudinal direction;
∘ a treaded outer surface (102);
∘ a treaded inner surface (202);
- a wall mounted flange (300),
wherein
- the fastening assembly kit is adapted to be mounted such that
∘ the treaded inner surface (202) of the fastener (100) receives the wall mounted flange (300), and
∘ the fastener (100) is inserted inside the wall bored hole, thereby fastening the treaded outer surface (102) of the fastener (100) to an inner surface of the wall bored hole,
- the wall mounted flange (300) comprises a treaded outer surface (301), the treaded outer surface (301) comprising grooves (306), and
- the treaded inner surface (202) of the fastener (100) comprises one or more limbs (203, 204) **characterized in that** the limbs (203, 204) extend in the longitudinal direction of the hollow cylindrical or tapered body, such that in mounted condition of the fastening assembly kit, the grooves (306) of the wall mounted flange (300) are clamped by the limbs (203, 204) of the fastener (100), thereby blocking an axial movement of the wall mounted flange (300).

2. The fastening assembly kit according to claim 1, wherein the treaded outer surface (102) of the fastener (100) comprises one or more ribs (103, 104) extending in the radial direction of the hollow cylindrical body, the one or more ribs (103, 104) being arranged to block an axial movement of the fastener (100) when inserted in the wall bored hole.

3. The fastening assembly kit according to any of the preceding claims, wherein the fastener (100) further comprises a stopping collar (105) at one aperture (101) being arranged for retaining the fastener (100) against a wall side when inserted in the wall bored hole.

4. The fastening assembly kit according to claim 3, wherein the stopping collar (105) comprises a locking hole (106) and the wall mounted flange (300) comprises a locking plug (302), such that in assembled condition the locking plug (302) is inserted in the locking hole (106), thereby blocking a rotational movement of the wall mounted flange (300) when inserted in the fastener (100).

5. The fastening assembly kit according to any of the preceding claims, wherein the treaded outer surface (102) of the fastener (100) further comprises truncated conical wedges (107, 108) rotational symmetrically positioned around the cylindrical or tapered body at one end of the hollow cylindrical or tapered body such that the fastener (100) is centred in the wall bored hole when inserted.

6. The fastening assembly kit according to any of the preceding claims, wherein the hollow cylindrical or tapered body of the fastener (100) further comprises one or more recesses (205, 206) suitable to accommodate an adhesive.

7. The fastening assembly kit according to any of the preceding claims, wherein the hollow cylindrical or tapered body of the fastener (100) further comprises a slit (109) extending longitudinally between the apertures (101, 201) at both ends.

8. The fastening assembly kit according to any of the preceding claims, wherein the fastener (100) further comprises a pointing leg (110) radially extending from the inner surface of the hollow cylindrical or tapered body to a central axis (111) of the hollow cylindrical or tapered body at an aperture (101), the pointing leg (110) being arranged to point the central axis (111).

9. The fastening assembly kit according to any of the preceding claims, wherein the wall mounted flange (300) further comprises a compartment (303) suitable to accommodate an adhesive between the wall mounted flange (300) and a wall when inserted in the wall bored hole.

10. Method for fastening a wall mounted flange (300), the wall mounted flange (300) comprising a treaded housing (301) comprising grooves (306), in a wall bored hole by use of a fastener (100), the fastener (100) comprising a hollow cylindrical or tapered body comprising apertures (101, 201) at both ends of its longitudinal direction, a treaded outer surface (102), and a treaded inner surface (202) arranged for receiving the wall mounted flange (300), the treaded inner surface (202) comprising one or more limbs (203, 204) extending in the longitudinal direction of the hollow cylindrical or tapered body, the method comprising the steps of:
- boring or sawing in a wall the wall bored hole, the wall bored hole suitable for connecting an outside water tap to an inner water drain tap;
- inserting the fastener (100) in the wall bored hole such that the treaded outer surface (102) of the fastener (100) is fastened to an inner surface of the wall bored hole; and
- inserting the wall mounted flange (300) in the fastener (100) such that the treaded housing (301) of the wall mounted flange (300) is fastened to the treaded inner surface (202) of the fastener (100) by clamping of the grooves (306) by the limbs (203, 204), thereby blocking an axial movement of the wall mounted flange (300).

## Patentansprüche

1. Befestigungsbausatz, geeignet zum Verbinden eines äußeren Wasserhahns mit einem inneren Wasserablasshahn durch ein Wandbohrloch, wobei der Befestigungsbausatz Folgendes umfasst:
- eine Befestigung (100), umfassend einen hohlzylindrischen oder sich verjüngenden Körper, umfassend:
∘ Öffnungen (101, 201) an beiden Enden seiner Längsrichtung;
∘ eine profilierte Außenfläche (102);
∘ eine profilierte Innenfläche (202);
- einen wandmontierten Flansch (300),
wobei
- der Befestigungsbausatz ausgelegt ist, um montiert zu werden, sodass
∘ die profilierte Innenfläche (202) der Befestigung (100) den wandmontierten Flansch (300) aufnimmt, und
∘ die Befestigung (100) in das Wandbohrloch eingeführt wird, wodurch die profilierte Außenfläche (102) der Befestigung (100) an einer Innenfläche des Wandbohrlochs befestigt wird,
- der wandmontierte Flansch (300) eine profilierte Außenfläche (301) umfasst, die profilierte Außenfläche (301) Nuten (306) umfasst, und
- die profilierte Innenfläche (202) der Befestigung (100) ein oder mehrere Glieder (203, 204) umfasst, **dadurch gekennzeichnet, dass** sich die Glieder (203, 204) in der Längsrichtung des hohlzylindrischen oder sich verjüngenden Körpers erstrecken, sodass im montierten Zustand des Befestigungsbausatzes die Nuten (306) des wandmontierten Flansches (300) durch die Glieder (203, 204) der Befestigung (100) geklemmt werden, wodurch eine axiale Bewegung des wandmontierten Flansches (300) blockiert wird.

2. Befestigungsbausatz nach Anspruch 1, wobei die profilierte Außenfläche (102) der Befestigung (100) eine oder mehrere Rippen (103, 104) umfasst, die sich in der radialen Richtung des hohlzylindrischen Körpers erstrecken, wobei die eine oder die mehreren Rippen (103, 104) angeordnet sind, um eine axiale Bewegung der Befestigung (100) zu blockieren, wenn sie in das Wandbohrloch eingeführt wird.

3. Befestigungsbausatz nach einem der vorhergehenden Ansprüche, wobei die Befestigung (100) ferner einen Anschlagbund (105) an einer Öffnung (101) umfasst, der angeordnet ist, um die Befestigung (100) gegen eine Wandseite zu halten, wenn sie in das Wandbohrloch eingeführt wird.

4. Befestigungsbausatz nach Anspruch 3, wobei der Anschlagbund (105) ein Verschlussloch (106) umfasst und der wandmontierte Flansch (300) einen Verschlussstopfen (302) umfasst, sodass im zusammengebauten Zustand der Verschlussstopfen (302) in das Verschlussloch (106) eingeführt wird, wodurch eine Drehbewegung des wandmontierten Flansches (300) blockiert wird, wenn er in die Befestigung (100) eingeführt wird.

5. Befestigungsbausatz nach einem der vorhergehenden Ansprüche, wobei die profilierte Außenfläche (102) der Befestigung (100) ferner kegelstumpfförmige Keile (107, 108) umfasst, die drehsymmetrisch um den zylindrischen oder sich verjüngenden Körper an einem Ende des hohlzylindrischen oder sich verjüngenden Körpers positioniert sind, sodass die Befestigung (100) beim Einführen in dem Wandbohrloch zentriert ist.

6. Befestigungsbausatz nach einem der vorhergehenden Ansprüche, wobei der hohlzylindrische oder sich verjüngende Körper der Befestigung (100) ferner eine oder mehrere Aussparungen (205, 206) umfasst, die geeignet sind, um einen Klebstoff unterzubringen.

7. Befestigungsbausatz nach einem der vorhergehenden Ansprüche, wobei der hohlzylindrische oder sich verjüngende Körper der Befestigung (100) ferner einen Schlitz (109) umfasst, der sich längs zwischen den Öffnungen (101, 201) an beiden Enden erstreckt.

8. Befestigungsbausatz nach einem der vorhergehenden Ansprüche, wobei die Befestigung (100) ferner einen Zeigeschenkel (110) umfasst, der sich radial von der Innenfläche des hohlzylindrischen oder sich verjüngenden Körpers zu einer Mittelachse (111) des hohlzylindrischen oder sich verjüngenden Körpers an einer Öffnung (101) erstreckt, wobei der Zeigeschenkel (110) angeordnet ist, um die Mittelachse (111) zu zeigen.

9. Befestigungsbausatz nach einem der vorhergehenden Ansprüche, wobei der wandmontierte Flansch (300) ferner eine Kammer (303) umfasst, die geeignet ist, um einen Klebstoff zwischen dem wandmontierten Flansch (300) und einer Wand unterzubringen, wenn er in das Wandbohrloch eingeführt wird.

10. Verfahren zum Befestigen eines wandmontierten Flansches (300), wobei der wandmontierte Flansch (300) ein profiliertes Gehäuse (301) umfasst, das Nuten (306) umfasst, in einem Wandbohrloch durch Verwendung einer Befestigung (100), wobei die Befestigung (100) einen hohlzylindrischen oder sich verjüngenden Körper umfasst, der Öffnungen (101, 201) an beiden Enden seiner Längsrichtung, eine profilierte Außenfläche (102) und eine profilierte Innenfläche (202) umfasst, die angeordnet sind, um den wandmontierten Flansch (300) aufzunehmen, wobei die profilierte Innenfläche (202) ein oder mehrere Glieder (203, 204) umfasst, die sich in der Längsrichtung des hohlzylindrischen oder sich verjüngenden Körpers erstrecken, wobei das Verfahren die folgenden Schritte umfasst:
- Bohren oder Sägen des Wandbohrlochs in einer Wand, wobei das Wandbohrloch geeignet ist, um einen äußeren Wasserhahn mit einem inneren Wasserablasshahn zu verbinden;
- Einführen der Befestigung (100) in das Wandbohrloch, sodass die profilierte Außenfläche (102) der Befestigung (100) an einer Innenfläche des Wandbohrlochs befestigt ist; und
- Einführen des wandmontierten Flansches (300) in der Befestigung (100), sodass das profilierte Gehäuse (301) des wandmontierten Flansches (300) an der profilierten Innenfläche (202) der Befestigung (100) durch Klemmen der Nuten (306) durch die Glieder (203, 204) befestigt ist, wodurch eine axiale Bewegung des wandmontierten Flansches (300) blockiert wird.

## Revendications

1. Kit d'ensemble de fixation adapté au raccordement d'un robinet d'eau extérieur à un robinet de vidange d'eau interne à travers un trou de paroi percé, le kit d'ensemble de fixation comprenant :
- un dispositif de fixation (100), comprenant un corps creux cylindrique ou effilé comprenant :
∘ des ouvertures (101, 201) au niveau des deux extrémités de sa direction longitudinale ;
∘ une surface externe sculptée (102) ;
∘ une surface interne sculptée (202) ;
- une bride de montage murale (300),
- ledit kit d'ensemble de fixation étant adapté pour être monté de sorte que
∘ la surface interne sculptée (202) du dispositif de fixation (100) reçoive la bride de montage murale (300), et
∘ le dispositif de fixation (100) soit inséré à l'intérieur du trou de paroi percé, fixant ainsi la surface externe sculptée (102) du dispositif de fixation (100) à une surface interne du trou de paroi percé,
- ladite bride de montage murale (300) comprenant une surface externe sculptée (301), ladite surface externe sculptée (301) comprenant des rainures (306), et
- ladite surface interne sculptée (202) du dispositif de fixation (100) comprenant une ou plusieurs branches (203, 204) **caractérisé en ce que** les branches (203, 204) s'étendent dans la direction longitudinale du corps cylindrique creux ou effilé, de sorte qu'à l'état monté du kit d'ensemble de fixation, les rainures (306) de la bride de montage murale (300) soient serrées par les branches (203, 204) du dispositif de fixation (100), bloquant ainsi un mouvement axial de la bride de montage murale (300).

2. Kit d'ensemble de fixation selon la revendication 1, ladite surface externe sculptée (102) du dispositif de fixation (100) comprenant une ou plusieurs nervures (103, 104) s'étendant dans la direction radiale du corps cylindrique creux, la ou les nervures (103, 104) étant agencées pour bloquer un mouvement axial du dispositif de fixation (100) lorsqu'il est inséré dans le trou de paroi percé.

3. Kit d'ensemble de fixation selon l'une quelconque des revendications précédentes, ledit dispositif de fixation (100) comprenant en outre un collier d'arrêt (105) au niveau d'une ouverture (101) qui est agencé pour retenir le dispositif de fixation (100) contre un côté de la paroi lorsqu'il est inséré dans le trou de paroi percé.

4. Kit d'ensemble de fixation selon la revendication 3, ledit collier d'arrêt (105) comprenant un trou de verrouillage (106) et la bride de montage murale (300) comprenant un bouchon de verrouillage (302), de sorte qu'à l'état assemblé le bouchon de verrouillage (302) soit inséré dans le trou de verrouillage (106), bloquant ainsi un mouvement de rotation de la bride de montage murale (300) lorsqu'elle est insérée dans le dispositif de fixation (100).

5. Kit d'ensemble de fixation selon l'une quelconque des revendications précédentes, ladite surface externe sculptée (102) du dispositif de fixation (100) comprenant en outre des coins effilés tronqués (107, 108) positionnés symétriquement en rotation autour du corps cylindrique ou effilé au niveau d'une extrémité du corps creux cylindrique ou effilé de sorte que le dispositif de fixation (100) soit centré dans le trou de paroi percé lorsqu'il est inséré.

6. Kit d'ensemble de fixation selon l'une quelconque des revendications précédentes, ledit corps creux cylindrique ou effilé du dispositif de fixation (100) comprenant en outre un ou plusieurs évidements (205, 206) adaptés pour recevoir un adhésif.

7. Kit d'ensemble de fixation selon l'une quelconque des revendications précédentes, ledit corps creux cylindrique ou effilé du dispositif de fixation (100) comprenant en outre une fente (109) s'étendant longitudinalement entre les ouvertures (101, 201) au niveau des deux extrémités.

8. Kit d'ensemble de fixation selon l'une quelconque des revendications précédentes, ledit dispositif de fixation (100) comprenant en outre une branche de pointage (110) s'étendant radialement à partir de la surface interne du corps cylindrique creux ou effilé jusqu'à un axe central (111) du corps cylindrique creux ou effilé au niveau d'une ouverture (101), la branche de pointage (110) étant agencée pour pointer l'axe central (111).

9. Kit d'ensemble de fixation selon l'une quelconque des revendications précédentes, ladite bride de montage murale (300) comprenant en outre un compartiment (303) adapté pour recevoir un adhésif entre la bride de montage murale (300) et une paroi lorsqu'elle est insérée dans le trou de paroi percé.

10. Procédé permettant la fixation d'une bride de montage murale (300), la bride de montage murale (300) comprenant un boîtier sculpté (301) comprenant des rainures (306), dans un trou de paroi percé à l'aide d'un dispositif de fixation (100), le dispositif de fixation (100) comprenant un corps creux cylindrique ou effilé comprenant des ouvertures (101, 201) au niveau des deux extrémités de sa direction longitudinale, une surface externe sculptée (102) et une surface interne sculptée (202) agencée pour recevoir la bride de montage murale (300), la surface interne sculptée (202) comprenant une ou plusieurs branches (203, 204) s'étendant dans la direction longitudinale du corps cylindrique creux ou effilé, le procédé comprenant les étapes de :
- perçage ou sciage dans une paroi du trou de paroi percé, le trou de paroi percé étant adapté pour raccorder un robinet d'eau extérieur à un robinet de vidange d'eau interne ;
- insertion du dispositif de fixation (100) dans le trou de paroi percé de sorte que la surface externe sculptée (102) du dispositif de fixation (100) soit fixée à une surface interne du trou de paroi percé ; et
- insertion de la bride de montage murale (300) dans le dispositif de fixation (100) de sorte que le boîtier sculpté (301) de la bride de montage murale (300) soit fixé à la surface interne sculptée (202) du dispositif de fixation (100) par serrage des rainures (306) par les branches (203, 204), bloquant ainsi un mouvement axial de la bride de montage murale (300).
